# DEMANDE DE BREVET EUROPEEN

(11) **EP 4 063 685 A1**
(43) Date de publication de la demande: **28.09.2022**
(21) Numéro de dépôt: 21164486.9
(22) Date de dépôt: 24.03.2021
(51) Int. Cl.: F16F 9/06, F16F 9/32, F16F 9/46

(54) **JAMBE DE FORCE À RESSORT ET SYSTÈME DE CHÂSSIS DE VÉHICULE**

(71) Demandeur: Robert Bosch GmbH, 70442 Stuttgart (DE)
(72) Inventeur: PERON, Sébastien, 12740 Sebazac (FR)
(74) Mandataire: Cabinet HERRBURGER

(57) **Abrégé**

Jambe de force à ressort (2) pour un véhicule comprenant un amortisseur (3) et un élément de ressort (19). L'amortisseur (3) a un cylindre (4) recevant un piston (6) guidé par une tige de piston (8) ainsi qu'une soupape d'amortisseur (10) pour commander l'ouverture de passage d'un fluide amortisseur ou son arrivée et sa sortie.

L'élément de ressort (19) comprend un ressort pneumatique avec une soupape de ressort (20).

Une unité de commande (12, 17) est couplée à la soupape d'amortisseur (10) et à la soupape de ressort (20), pour qu'en fonction de signaux d'une installation de mesure d'inertie (16, 18), commander l'amortissement et le comportement de ressort de la jambe de force (2) par la commande de la soupape d'amortisseur (10) et de la soupape de ressort (20).

## Description

### DOMAINE DE L'INVENTION

La présente invention se rapporte à une jambe de force à ressort pour un véhicule, ayant un amortisseur et un élément de ressort, l'amortisseur ayant un cylindre d'amortisseur recevant un piston guidé par une tige de piston ainsi qu'une soupape d'amortisseur pour commander l'ouverture de passage d'un fluide amortisseur ou son arrivée et sa sortie.

L'invention se rapporte également à un système de châssis équipé de telles jambes de force à ressort.

### ETAT DE LA TECHNIQUE

Les véhicules automobiles actuels utilisent entre autres des jambes de force à ressort avec des amortisseurs dont l'amortissement est réglable. Il est également de plus en plus répandu d'intégrer dans de tels véhicules, plusieurs capteurs d'accélération fournissant une information concernant les mouvements du véhicule. Une unité centrale de commande reçoit les signaux des différents capteurs d'accélération pour en déduire les adaptations nécessaires ou souhaitables du comportement d'amortissement. L'unité de commande est reliée aux amortisseurs et peut à son tour actionner des soupapes pour commander le passage du liquide amortisseur ou l'alimentation et la sortie d'un liquide amortisseur.

On constate que l'équipement d'un véhicule avec des capteurs d'accélération, le câblage de l'unité de commande reliée à tous les amortisseurs et aux capteurs d'accélération sont compliqués et le montage final nécessite toujours un contrôle du fonctionnement.

### BUT DE L'INVENTION

La présente invention a pour but de développer une variante de jambe de force pour adapter le comportement d'amortissement de l'amortisseur de la jambe de force, et réduise les moyens d'intégration à mettre en œuvre.

### EXPOSE ET AVANTAGES DE L'INVENTION

A cet effet, l'invention a pour objet une jambe de force à ressort du type défini ci-dessus caractérisée en ce que l'élément de ressort comprend un ressort pneumatique avec une soupape de ressort et la jambe de force à ressort comporte une unité de commande couplée à la soupape d'amortisseur et à la soupape de ressort, en étant réalisée pour commander le comportement d'amortissement et le comportement de ressort de la jambe de force à ressort par la commande de la soupape d'amortisseur et de la soupape de ressort en fonction de signaux d'au moins une installation de mesure d'inertie.

En d'autres termes, l'invention a pour objet une jambe de force à ressort de véhicule comprenant un amortisseur et un élément de ressort ; l'amortisseur a un cylindre d'amortisseur recevant un piston guidé par une tige de piston ainsi qu'une soupape d'amortisseur pour commander le passage du fluide amortisseur ou son entrée et sa sortie. Selon l'invention, l'élément de ressort comporte un ressort pneumatique avec une soupape de ressort et la jambe de force comporte une unité de commande couplée à la soupape de l'amortisseur et à la soupape de ressort ; cette unité de commande gère, le comportement d'amortissement et de suspension de la jambe de force à ressort en commandant la soupape d'amortisseur et la soupape de ressort en fonction de signaux d'au moins une installation de mesure d'inertie.

L'amortisseur est, en particulier, un amortisseur linéaire ou axial s'appuyant sur le mouvement d'un piston dans le cylindre d'amortisseur. Le comportement d'amortissement peut se régler par la commande de la soupape d'amortisseur. La soupape d'amortisseur est intégrée dans l'amortisseur. Cela permet ainsi d'influencer la section d'ouverture d'un canal traversé par le fluide. Lorsque le piston déplace le liquide de l'amortisseur, dans un certain type de construction d'amortisseur, le liquide de l'amortisseur est refoulé à travers un canal ouvert par le mouvement du piston. En modifiant, de manière active, la section de l'ouverture, on influence la perte de charge de sorte que le piston peut s'opposer par son mouvement, à une force d'amortissement plus ou moins importante. Selon d'autres types de construction, on adapte, par exemple, la pression du liquide amortisseur pour que la soupape d'amortisseur débute une arrivée ou une sortie de liquide pour influencer l'amortissement. D'autres variantes sont envisageables sans être exclues.

Le ressort pneumatique a une ou plusieurs chambres à air servant d'élément de ressort. En alimentant ou en évacuant l'air en alternance, on influence la raideur du ressort. Le ressort pneumatique comporte une soupape de ressort. Par exemple, l'élément de ressort comporte deux chambres associées axialement, c'est-à-dire en série et la soupape de ressort les fait communiquer par une liaison fluidique. Les deux chambres fonctionnent ainsi l'une contre l'autre comme des ressorts. En plus de la force de ressort agissant vers l'extérieur la commande de la soupape de ressort permet de générer également avec un certain effet d'amortissement.

Une particularité de la jambe de force à ressort selon l'invention est de comporter une unité de commande reliée à la soupape d'amortisseur et à la soupape de ressort. Selon une variante générale, l'unité de commande est une unité de commande interne ou externe. Elle peut également être intégrée comme fonction supplémentaire à une unité de commande existante ou être réalisée sous la forme d'un appareil distinct. L'installation de mesure d'inertie permet de transmettre des signaux à l'unité de commande pour fournir des informations du mouvement du véhicule à l'unité de commande.

La commande des deux soupapes influence directement à la fois le comportement d'amortissement et la raideur du ressort. En particulier, la jambe de force à ressort est autonome ou très largement autonome de sorte que le réglage du comportement d'amortissement et/ou la raideur du ressort se font directement dans la jambe de force elle-même ; cette jambe de force ne dépend pas d'une unité de commande externe, par exemple, par un câblage correspondant. Cela permet d'intégrer l'unité de commande et/ou au moins une installation de mesure d'inertie dans la jambe de force à ressort.

De façon analogue à l'état de la technique présenté ci-dessus, à partir du mouvement on peut déduire la variation souhaitée ou nécessaire du comportement d'amortissement. En plus, on peut commander la soupape de ressort pour réaliser un autre degré de liberté pour générer la force de ressort appliquée à la roue correspondante. Ainsi, on réduit les oscillations de la charge de roue et on améliore la dynamique de roulage et la sécurité. L'accélération appliquée à la structure est réduite et cela améliore le confort des passagers en particulier la combinaison du réglage du ressort et de l'amortisseur réduit ou élimine l'oscillation verticale dans la plage des très basses fréquences au plus égales à 8 Hz pour éviter le mal du voyage des passagers.

Selon un développement avantageux, l'installation de mesure d'inertie est intégrée dans la jambe de force à ressort. Cela permet de mesurer le mouvement selon au moins une direction dans l'espace, cela par un capteur d'accélération. Des installations de mesure d'inertie plus complexes comportent plusieurs capteurs d'accélération mesurant l'accélération dans différentes directions. L'installation de mesure d'inertie est, par exemple, une unité de mesure inertielle (IMU) comportant des capteurs à semi-conducteurs et/ou un système de gyroscope mécanique. Une unité de mesure inertielle peut être combinée à un ou plusieurs capteurs d'accélération. En outre, l'installation de mesure d'inertie intégrée dans la jambe de force à ressort peut également comporter deux capteurs d'accélération. Les deux capteurs d'accélération permettent de saisir des accélérations dans des directions différentes, par exemple, dans la direction longitudinale et dans la direction transversale. Une installation de mesure d'inertie peut notamment être installée sur un segment de la jambe de force à ressort reliée directement au châssis du véhicule. Si le cylindre d'amortisseur est couplé à la roue ou à un bras transversal, la tige de piston étant reliée au châssis, on peut avoir au moins un capteur d'accélération sur le composant relié à la tige de piston. Une remarque analogue s'applique à un montage inversé.

En outre, l'unité de commande peut être intégrée dans la jambe de force à ressort. L'unité de commande est alors reliée à la soupape d'amortisseur et à la soupape de ressort, ce qui se réalise par une liaison sans fil ou une liaison par fil. L'unité de commande et au moins une installation de mesure par inertie peuvent même former une unité reliée, par exemple, par l'intégration d'un capteur d'accélération dans l'unité de commande ou dans son boîtier. L'unité de commande permet de recevoir les signaux de l'installation de mesure d'inertie et fournir ainsi une information concernant le mouvement du véhicule ou le mouvement de la jambe de force à ressort, ce qui permet de commander les soupapes.

La jambe de force à ressort peut être ainsi très largement indépendante d'installations externes. Selon une forme de réalisation avantageuse, la jambe de force a, en outre, une source d'énergie pour alimenter l'unité de commande et/ou la soupape d'amortisseur et/ou la soupape de ressort. La source d'énergie est, par exemple, une batterie comportant des accumulateurs rechargeables. Cela permet un fonctionnement autonome de la jambe de force à ressort.

De manière particulièrement avantageuse, la jambe de force à ressort commande l'élément de ressort par la sélection d'un niveau de force de ressort dans un ensemble de niveaux de force de ressort, prédéfinis par l'unité de commande. Ainsi, en particulier, en fonction de la charge du véhicule qui agit directement sur la charge appliquée à la jambe de force à ressort, on pourra régler la force de ressort selon des niveaux. Cela peut se faire automatiquement, directement dans l'unité de commande en se fondant sur l'exploitation des mouvements saisis du véhicule. On peut envisager deux, trois, quatre ou même plus de niveaux de force de ressort.

Selon une forme de réalisation avantageuse, la jambe de force à ressort est toutefois également réalisée pour commander l'élément de ressort au moins de façon semi-active par l'unité de commande. Une commande semi-active permet d'adapter l'élément de ressort par une courbe caractéristique à l'état de circulation instantanée et notamment en influençant en continu la soupape de ressort. La commande active nécessite un organe de réglage qui applique activement une force s'opposant au poids ou à la charge appliqué à la jambe de force à ressort. Ainsi, à côté de la soupape de ressort, on peut également utiliser une source d'air sous pression et/ou un actionneur à fluide.

De façon préférentielle, la jambe de force à ressort a une unité de liaison sans fil pour coupler la jambe de force à ressort à une unité de commande externe et/ou à une autre jambe de force à ressort. L'unité de liaison sans fil peut également s'appuyer sur des procédés de liaison différents qui peuvent utiliser des protocoles de transmission connus, adaptés à l'éloignement correspondant dans le véhicule. A côté de Bluetooth, ZigBee, WiFi, Z-wave et NFC on peut également envisager d'autres procédés ou protocoles de communication. L'unité de liaison sans fil peut être prévue en plus de l'installation de mesure d'inertie et/ou de l'unité de commande. Selon un cas particulier, la jambe de force à ressort selon l'invention peut avoir toutes les caractéristiques réalisant la fonction de réglage ou d'adaptation du comportement d'amortissement et/ou du comportement de ressort. La jambe de force à ressort doit être intégrée uniquement dans le véhicule concerné et sans câblage ou pratiquement sans câblage pour remplir la mission. Ainsi, on supprime les câblages compliqués et les connexions ce qui réduit significativement les moyens d'intégration. Les jambes de force à ressort selon l'invention peuvent en outre être contrôlées avant leur intégration dans le véhicule, ce qui supprime la vérification postérieure à son intégration dans le véhicule. Cela diminue le temps de montage et celui des essais.

De façon préférentielle, l'élément de ressort est un système à deux chambres. Comme déjà exposé, la soupape de ressort permet de commander la liaison fluidique entre les deux chambres et l'influencer en modifiant la section de passage. A côté du comportement de ressort, cela permet également d'adapter le comportement d'amortissement.

Selon une autre forme de réalisation avantageuse, la jambe de force à ressort s'intègre dans la liaison de transmission de signal avec une unité de commande externe et/ou une installation de mesure d'inertie externe et/ou une autre jambe de force à ressort et la soupape d'amortisseur et/ou la soupape de ressort sont commandées pour régler le comportement d'amortissement et/ou le comportement de ressort de la jambe de force à ressort en s'appuyant sur les signaux reçus de l'unité de commande externe et/ou de l'installation de mesure d'inertie et/ou de l'autre jambe de force à ressort. La jambe de force à ressort peut recevoir des signaux externes qui permettent la commande totale ou complémentaire du comportement d'amortissement et/ou du comportement de ressort. Une unité de commande externe permet, par exemple, par une sorte de coordination, d'agir sur les différentes jambes de force à ressort et/ou d'avoir une commande totale des jambes de force à ressort. La transmission des signaux peut se faire ainsi par une liaison sans fil. L'unité de commande externe peut, selon une première option, émettre uniquement de simples signaux de commande. Ceux-ci serviront, par exemple, à activer un mode de circulation ou d'amortissement particulier pour maintenir celui-ci pendant une certaine durée.

Toutefois, selon une seconde option, on peut également avoir une commande continue de la jambe de force à ressort en émettant des signaux de commande en continu qui influencent le comportement instantané d'amortissement et/ou de comportement de ressort. Une installation de mesure d'inertie externe peut être prévue à un emplacement exposé dans le véhicule et fournir des données précises du mouvement du véhicule. On peut également, de façon préférentielle, ne pas avoir de liaison câblée avec les jambes de force à ressort concernées. La liaison avec une autre jambe de force à ressort peut être intéressante pour adapter le comportement d'amortissement et/ou le comportement de ressort de l'une des jambes de force à ressort à l'autre jambe de force à ressort. Si une jambe de force à ressort subit une secousse particulièrement intense ou une accélération particulièrement élevée produites par une irrégularité locale de la chaussée, on pourra adapter de façon prévisionnelle, le comportement d'amortissement et/ou le comportement de ressort des autres jambes de force à ressort. Cela permet de réaliser de multiples algorithmes de commande différents.

On peut également envisager une forme de réalisation selon laquelle l'unité de commande externe est une unité de commande ABS et/ou ESP et cette unité de commande externe est réalisée pour commander la soupape d'amortisseur pour régler le comportement d'amortissement et/ou la soupape de commande de ressort pour influencer le comportement de ressort. L'unité de commande externe peut assurer sensiblement la commande complète de la soupape d'amortisseur et/ou de la soupape de ressort. L'unité de commande externe pourrait toutefois assurer uniquement une fonction complémentaire et, par exemple, au déclenchement d'une phase ESR ou ABS, de transmettre un signal déterminé aux jambes de force à ressort pour régler le comportement d'amortissement et/ou le comportement de ressort, directement sur cette grandeur appropriée. On améliore ainsi, par exemple, l'adhérence au sol des roues dans ce cas particulier.

L'invention a également pour objet un système de châssis équipé de plusieurs jambes de force à ressort selon la description ci-dessus.

Le système de châssis, dans le cas simple, comporte une installation centrale de mesure d'inertie, externe installée à l'extérieur de la jambe de force à ressort dans le véhicule concerné en étant reliée aux jambes de force à ressort. L'installation de mesure d'inertie externe peut être prévue dans la zone avant ou la zone arrière du véhicule et communiquer avec toutes les jambes de force à ressort.

Suivant une autre caractéristique avantageuse, les jambes de force à ressort, comme indiqué ci-dessus, communiquent par les signaux et sont réalisées pour adapter le comportement d'amortissement et/ou le comportement de ressort des jambes de force à ressort.

### BREVE DESCRIPTION DES DESSINS

La présente invention sera décrite ci-après de manière plus détaillée à l'aide d'exemples de jambe de force à ressort représentée dans les dessins annexés dans lesquels :
[Fig. 1] premier mode de réalisation d'une jambe de force à ressort,
[Fig. 2] autre mode de réalisation d'une jambe de force à ressort,
[Fig. 3] système de châssis,

### DESCRIPTION DE MODES DE REALISATION

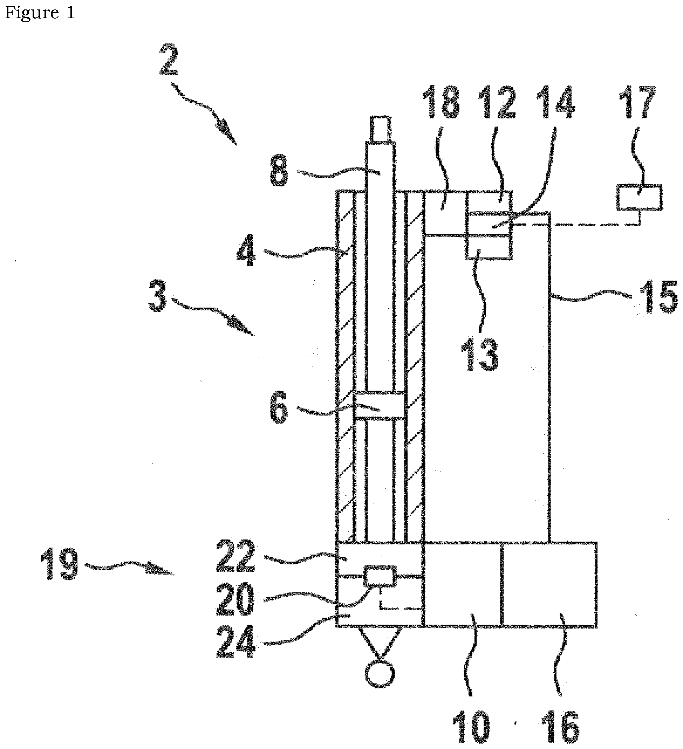

La figure 1 montre une jambe de force à ressort 2 pour un véhicule. La jambe de force à ressort 2 comporte un amortisseur 3 avec un cylindre d'amortisseur 4 recevant un piston 6 guidé par une tige de piston 8. Une soupape d'amortisseur 10 commande le passage du fluide d'amortisseur ou l'entrée et la sortie du fluide d'amortisseur. La jambe de force à ressort 2 comporte également une unité de commande 12 intégrée dans la jambe de force à ressort 2 et celle-ci est reliée à la soupape d'amortisseur 10. L'unité de commande 12 comporte une unité de liaison sans fil 14 pour recevoir les signaux d'une installation de mesure d'inertie sous la forme de deux capteurs d'accélération 16 et 18. Un premier capteur d'accélération 16 est associé au cylindre d'amortisseur 4 et un second capteur d'accélération 18 est monté sur la tige de piston 8. La tige de piston 8 pourrait, par exemple, être reliée au châssis d'un véhicule de façon que le second capteur d'accélération 18 soit également couplé au châssis.

L'unité de commande 12 est reliée par un câble 15 à la soupape d'amortisseur 10 et aux deux capteurs d'accélération 16 et 18. Le second capteur d'accélération 18 pourrait être également prévu directement dans l'unité de commande 12, par exemple, directement sur la platine de l'unité de commande 12 ou dans ou sur le boîtier de l'unité de commande 12. L'unité de commande 12 est conçue pour commander la soupape d'amortisseur 10 pour régler le comportement d'amortissement de l'amortisseur 3 de la jambe de force à ressort 2 en fonction des signaux reçus des capteurs d'accélération 16 et 18.

La jambe de force à ressort 2 comporte également un élément de ressort 19 muni d'une soupape de ressort 20 entre une première chambre à air 22 et une seconde chambre à air 24. La soupape à ressort 20 réalise la liaison fluidique entre les deux chambres à air 22 et 24 et peut régler ainsi le comportement de ressort de l'élément de ressort 19 et notamment la constante de ressort. L'unité de commande 12 est également reliée à la soupape de ressort 20.

L'unité de liaison 14 peut être réalisée sous la forme d'une unité de liaison sans fil permettant une communication bidirectionnelle. La jambe de force à ressort 2 est en outre reliée à l'autre jambe de force à ressort 2 et le cas échéant à d'autres composants externes, par exemple, une unité de commande 17 externe. Plusieurs jambes de force à ressort 2 peuvent alors communiquer entre elles et adapter, de façon appropriée, leur comportement d'amortissement et leur comportement de ressort. Une source d'énergie 13, par exemple, sous la forme d'une batterie est prévue pour alimenter en énergie électrique l'unité de commande 12 et les deux soupapes 10 et 20.

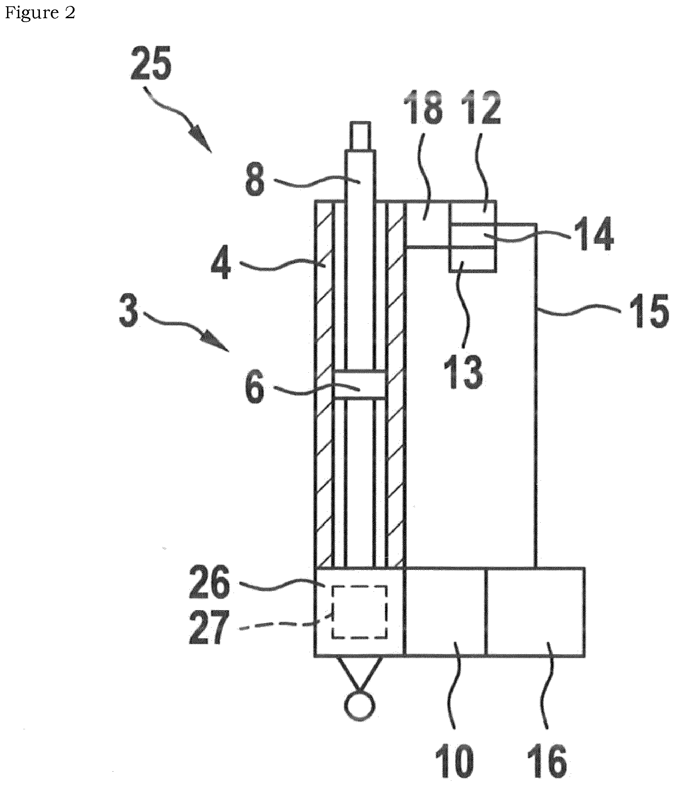

La figure 2 montre une autre variante sous la forme d'une jambe de force à ressort 25 qui est également la combinaison d'un amortisseur 3 et d'un élément de ressort 26. Ce dernier est réglable de manière active par l'alimentation active d'air pour générer une force s'opposant au poids ou à la charge appliquée à la jambe de force à ressort. Une soupape de ressort 27 est représentée schématiquement. Elle est commandée par l'unité de commande 12. On peut également avoir plusieurs soupapes de ressort.

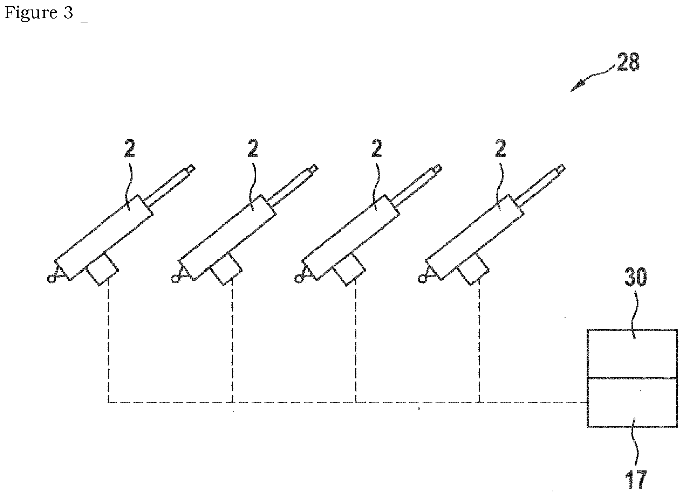

La figure 3 montre schématiquement un système de châssis 28 à plusieurs jambes de force à ressort 2 reliées entre elles par une liaison sans fil. Une installation centrale de mesure d'inertie, externe, 30 peut être prévue et communiquer avec les jambes de force à ressort 2 pour commander le comportement d'amortissement et/ou le comportement de ressort et l'assister. De la même manière, l'unité de commande externe 17 peut également être reliée aux jambes de force à ressort 2.

### NOMENCLATURE DES ELEMENTS PRINCIPAUX

2 Jambe de force à ressort
3 Amortisseur
4 Cylindre d'amortisseur
6 Piston
8 Tige de piston
10 Soupape d'amortisseur
12 Unité de commande
13 Source d'énergie
14 Unité de liaison sans fil
15 Câble
16 Capteur d'accélération
17 Unité de commande
18 Capteur d'accélération
19 Elément de ressort
20 Soupape de ressort
22 Première chambre à air
24 Seconde chambre à air
25 Jambe de force à ressort
27 Soupape de ressort
28 Système de châssis
30 Installation de mesure d'inertie

## Revendications

1. Jambe de force à ressort (2, 26) pour un véhicule comprenant un amortisseur (3) et un élément de ressort (19), l'amortisseur (3) ayant un cylindre d'amortisseur (4) recevant un piston (6) guidé par une tige de piston (8) ainsi qu'une soupape d'amortisseur (10) pour commander l'ouverture de passage d'un fluide amortisseur ou son arrivée et sa sortie, jambe de force à ressort **caractérisée en ce que**
l'élément de ressort (19, 26) comprend un ressort pneumatique avec une soupape de ressort (20, 27) et,
- la jambe de force à ressort (2, 26) comporte une unité de commande (12, 17) couplée à la soupape d'amortisseur (10) et à la soupape de ressort (20, 27), pour, en fonction de signaux d'au moins une installation de mesure d'inertie (16, 18, 30), commander le comportement d'amortissement et le comportement de ressort de la jambe de force à ressort (2, 26) par la commande de la soupape d'amortisseur (10) et de la soupape de ressort (20, 27).

2. Jambe de force à ressort (2, 26) selon la revendication 1,
**caractérisée en ce que**
au moins une installation de mesure d'inertie (16, 18, 30) est intégrée dans la jambe de force à ressort (2, 26).

3. Jambe de force à ressort (2, 26) selon la revendication 1 ou 2,
**caractérisée en ce que**
l'unité de commande (12, 17) est intégrée dans la jambe de force à ressort (2, 26).

4. Jambe de force à ressort (2, 26) selon l'une des revendications précédentes,
**caractérisée en ce qu'**il comprend
une source d'énergie (13) pour le fonctionnement de l'unité de commande (12, 17) et/ou de la soupape d'amortisseur (10) et/ou de la soupape de ressort (20, 27).

5. Jambe de force à ressort (2, 26) selon l'une des revendications précédentes,
**caractérisée en ce que**
la jambe de force à ressort (2, 26) est réalisée pour commander par un choix sélectif d'un niveau de force de ressort dans un ensemble de niveaux de force de ressort, prédéfinis par l'unité de commande.

6. Jambe de force à ressort (2, 26) selon l'une des revendications précédentes,
**caractérisée en ce que**
la jambe de force à ressort (2, 26) commande l'élément de ressort (19, 26) au moins dans un état semi-actif par l'unité de commande (12, 17).

7. Jambe de force à ressort (2, 26) selon l'une des revendications précédentes,
**caractérisée en ce que**
la jambe de force à ressort (2, 26) comporte une unité de liaison sans fil (14) pour coupler la jambe de force à ressort (2, 26) à une unité de commande externe (17) et/ou à une autre jambe de force à ressort (2, 26).

8. Jambe de force à ressort (2, 26) selon l'une des revendications précédentes,
**caractérisée en ce que**
l'élément de ressort (19, 26) comporte un système à deux chambres (22, 24).

9. Système de châssis (28) comportant plusieurs jambes de force à ressort (2, 26) selon l'une des revendications précédentes.

10. Système de châssis (28) selon la revendication 9,
**caractérisé en ce que**
les jambes de force à ressort (2, 26) sont reliées par une liaison de transmission de signal et elles adaptent les uns aux autres le comportement d'amortissement des jambes de ressort (2, 25) et/ou le comportement de ressort des jambes de force à ressort (2, 25).
